# EUROPEAN PATENT APPLICATION

(11) **EP 2 058 052 A1**
(43) Date of publication of application: **13.05.2009**
(21) Application number: 08018149.8
(22) Date of filing: 16.10.2008
(51) Int. Cl.: B02C 19/00, H01J 9/52

(54) **Lamp collecting apparatus and method for collecting used lamps**

(30) Priority: 09.11.2007 US 986700 P
(71) Applicant: Gilliam, Roy N., St. Peters MO 63304 (US); Smith, Robert Gene, Labadie MO 63055 (US); Buha, Nickolas Christopher, St. Peters MO 66304 (US)
(72) Inventor: Gilliam, Roy N., St. Peters MO 63304 (US); Smith, Robert Gene, Labadie MO 63055 (US); Buha, Nickolas Christopher, St. Peters MO 66304 (US)
(74) Representative: Schlimme, Wolfram

(57) **Abstract**

A lamp collecting apparatus for collecting used illuminants like bulbs or tubes said apparatus comprises a housing (1) with a lamp inserting opening (16) and an air outlet opening (46); a breaker device (5) provided in the housing (1) below the lamp inserting opening (16); a container (10') for collecting lamp scrap, said container (10') being disposed in said housing (1) below said breaker device (5); a low pressure generating system (4) having a suction portion with an air inlet (42) and an exhaust portion with an air outlet (43) wherein said air inlet (42) is effectively connected to the air outlet opening (46) of the housing (1).

## Description

The present invention claims the priority of the provisional US patent application number 60/986,700 filed on November 09, 2007, the entire content of which is hereby incorporated by reference.

### BACKGROUND OF THE INVENTION

### Field of the Invention

The present invention is directed to a lamp collecting apparatus and in particular to a lamp collecting apparatus adapted to collect used or burned out illuminants like bulbs or tubes in a space-saving manner without polluting the environment. The invention is further directed to a method for collecting used lamps like bulbs or tubes.

Lamps, in particular fluorescent tubes and energy saving lamps, often contain toxic substances, like mercury, which may not be disposed in the environment after the lamp has reached the end of its lifetime. These toxic substances may either be provided as solid substance on the inner surface of the glass tube or glass bulb or may be gaseous and may be provided in the inner hollow space of a lamp bulb body or a lamp tube body. Examples for such kind of lamps are fluorescent lamps, high intensity discharge neon lamps, mercury vapor lamps, high pressure sodium lamps, metal halide lamps and compact fluorescent lightings (CFL) used in general household lighting.

### Related Art

As such toxic substances may not be disposed in the environment lamps containing such toxic substances need to be collected and recycled. However, the collection of lamps, in particular of fluorescent tubes is complicated and dangerous because these tubes can easily break during the collection process so that toxic substances can already escape from the interior of the lamp during the collection of used lamps. Another aspect is that lamps, in particular fluorescent tubes, need a lot of storage space which reduces the efficiency of the collection work.

### SUMMARY OF THE INVENTION

It is therefore an object of the present invention to provide a lamp collecting apparatus and a method for collecting lamps like bulbs or tubes which overcome the disadvantages pointed out above and which allow to reduce the space needed for the collection of lamps without the danger that toxic substances escape from the interior of the lamps to the environment.

This object is achieved by a lamp collecting apparatus with the features of claim 1.

The lamp collecting apparatus of the present invention comprises a housing with a lamp inserting opening and an air outlet opening, a breaker device provided in the housing below the lamp inserting opening, a container for collecting lamp scrap, said container being disposed in said housing below said breaker device, a vacuum pump having a suction portion with an air inlet and an exhaust portion with an air outlet wherein said air inlet is effectively connected to the air outlet opening of the housing.

The provision of a low pressure generation system, preferably a vacuum pump, which is collected by a suction channel to the housing of the apparatus ensures that dust or gases which escape from the interior of the lamp body when the lamp is broken in the breaker device are drawn out of the housing by the vacuum pump so that they can be filtered or stored in a safe environment.

In a preferred embodiment said housing is provided with a movable cover on the lamp inserting opening so that the lamp inserting opening can be selectively opened or closed by said cover. Such a cover will also prevent dust or gases from leaving the housing when the cover is closed.

In another preferred embodiment a membrane means is provided between said lamp inserting opening and said breaker device to prevent gas and dust from escaping through the lamp inserting opening. Such a membrane may have at least one slit allowing that the lamp can be inserted through the membrane towards the breaker device. When the lamp has passed the membrane the slit is automatically closed by resilient forces of the membrane so that gas and dust are prevented from escaping through the lamp inserting opening.

The breaker device is preferably provided with a motor and with at least one mechanically movable breaker element driven by said motor. This active breaker device easily ensures that the glass body of the lamp is destroyed and is broken into scrap particles by the mechanically movable breaker element which for example rotates in the housing driven by the motor.

In another advantageous embodiment of the present invention a filter device is provided between the air outlet opening of the housing and the low pressure generating system or in the exhaust portion of the low pressure generating system. This filter device is provided to clean the air drawn out from the housing and blown to the environment.

Preferably, the filter device comprises a grid for preventing coarse scrap particles from leaving the housing through the exhaust portion to the ambient air.

Further preferably, the filter device comprises a dust filter element for preventing dust particles from leaving the housing through the exhaust portion to the ambient air.

In a particular preferred embodiment of the present invention the filter device comprises a second filter element with an adsorbent material, preferably activated carbon and/or at least one molecular sieve, for preventing selected gases, preferably toxic gases and/or toxic particles, from leaving the housing through the exhaust portion to the ambient air.

Preferably, said breaker motor is an electrically powered motor and a control device is provided to control the electric power supplied to said motor.

Said control device is preferably adapted to supply electric power to said motor only when said low pressure generating system is working. This feature will ensure that toxic substances enclosed in the interior of the lamp may not be liberated before the low pressure generating system is working so that any deliberated toxic substances are drawn out from the housing and cannot escape from the housing through the lamp inserting opening or any other leakage into the ambient air.

The cover of the lamp inserting opening is preferably provided with a sealing which ensures an airtight seal of the lamp inserting opening when the cover is in its closed position. This airtight sealing will also prevent toxic gases from escaping the housing.

Preferably, a spring member is provided which resiliently biases said cover towards the closed position in which the cover airtightly closes the lamp inserting opening. Such a spring-biased cover is automatically closed after a lamp has been inserted through the inserting opening.

In another preferred embodiment the housing comprises a tubular portion wherein the lamp inserting opening is provided at a first end of said tubular portion. The second end thereof opens into the container above the breaker device.

If a device for checking the remaining capacity of the container is provided in or at the housing, a user can obtain information about the space already filled by the lamp scrap.

A second aspect of the present invention is directed to a method for collecting used lamps like bulbs or tubes in a lamp collecting apparatus according to the invention. This inventive method comprises the steps of energizing the low pressure generating system, energizing the breaker device in order to break a lamp fed to the breaker device into lamp scrap particles, feeding a lamp through the lamp insertion opening into the lamp collecting apparatus, and preferably removing dust, gases and/or volatile substances from the air leaving said housing and exhausted to the ambient air.

This inventive method allows a space saving collection of used lamps, in particular of bulbs or tubes, by breaking them into lamp scrap without the risk of exhausting toxic particles, dust or gases to the environment.

### BRIEF DESCRIPTION OF THE DRAWINGS

The present invention will become more fully understood from the detailed description given hereinbelow and the accompanying drawings which are given by way of illustration only, and thus are not limitative of the present invention.
- **Fig. 1**: is a schematic illustration of a lamp collecting apparatus according to a first embodiment of the present invention.
- **Fig. 2**: is a schematic illustration showing a second, mobile embodiment of the present invention.
- **Fig. 3**: shows the process steps of the lamp collecting method according to the invention.

### DETAILED DESCRIPTION OF THE INVENTION

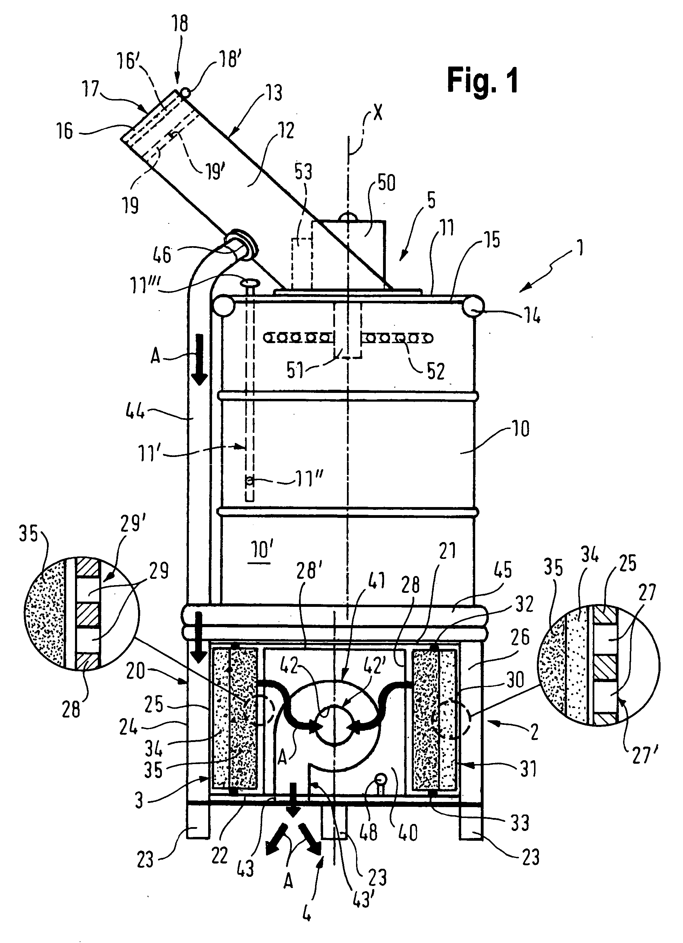

Fig. 1 shows a lamp collecting apparatus according to a first embodiment of the present invention. Arrows indicate the air flow generating a low pressure or vacuum inside of the apparatus. The lamp collecting apparatus comprises a housing 1 with a first cylindrical body 10 in form of a barrel. The first cylindrical body 10 is placed on a rack 2 such that the rotational axis X of the cylindrical body 10 is substantially vertical. The inner space of the first cylindrical body 10 defines a container 10'.

The housing 1 also comprises a second cylindrical body 12 which defines a tubular portion 13 of the housing 1. The tubular portion 13 is inclined with respect to the rotational axis X of the first cylindrical body 10 and is connected to an upper end plate 11 of the first cylindrical body 10 at an eccentric position so that the tubular portion 13 opens into the interior space of the first cylindrical body 10. The upper end plate 11 is connected to the upper end of the first cylindrical body 10 by a known clamp ring 14 wherein an airtight lid 15 is provided between an upper annular end face of the first cylindrical body 10 and an annular sealing portion of the upper end plate 11. The tubular portion 13 is thus connected to the first cylindrical body 10 in an airtight manner.

The upper end portion of the second cylindrical body 12 is open and defines a lamp inserting opening 16.

A cover 17 is connected by a hinge 18 to the upper end portion of the second cylindrical body 12 so that the lamp inserting opening 16 can be selectively opened or closed by the cover 17. A spring 18' biases the cover 17 into the closed position. A sealing 16' is provided at the cover 17 and/or at the free end portion of the second cylindrical body 12 so that the lamp inserting opening 16 is airtightly sealed when the cover 17 is in its closed position closing the lamp inserting opening 16.

A membrane 19 is mounted in the cross section of the second cylindrical body 12 close to the lamp inserting opening 16. The membrane 19 extends across the inner cross section of the second cylindrical body 12 and is provided with at least one slit 19' extending in a radial direction. Slit 19' allows to insert lamps like bulbs or tubes through the membrane 19 into the housing 1 of the lamp collecting apparatus. Due to the resilient material of the membrane 19 the membrane closes again after a lamp has passed through slit 19'.

Rack 2 comprises also a cylindrical body 20 which has an outer circumferential wall 24 and which is closed at its upper and lower end faces by a respective end plate 21, 22. The cylindrical body 20 of rack 2 stands on at least three legs 23 which are mounted to the lower end plate 22 of the cylindrical body 20. The upper end plate 21 supports the first cylindrical body 10 of housing 1.

Radially inside of the outer circumferential wall 24 of the cylindrical body 20 there is provided and inner circumferential wall 25 which is spaced apart in a radial direction from the outer circumferential wall 24 so that an annular space 26 is defined between the outer circumferential wall 24 and the inner circumferential wall 25. The inner circumferential wall 25 and the outer circumferential wall 24 are both connected to the upper end plate 21 and to the lower end plate 22 in an airtight manner wherein the upper end plate 21 is removably connected to the circumferential walls 24, 25.

The inner circumferential wall 25 is provided with a plurality of openings 27 so that the inner circumferential wall 25 defines a grid 27'.

Radially inside of the inner circumferential wall 25 there is provided a central circumferential wall 28 which is provided with openings 29 like the openings 27 in the inner circumferential wall 25 so that the central circumferential wall 28 defines a grid 28'. The central circumferential wall 28 is radially spaced apart from the inner circumferential wall 25 defining an annular space 30 for a filter device 3 between the inner circumferential wall 25 and the central circumferential wall 28.

The filter device 3 comprises an annular filter cartridge 31 which is placed in the annular space 30. The annular end faces of the filter cartridge 31 are provided with annular sealings 32, 33 which contact the upper end plate 21 and the lower end plate 22, respectively, so that air flowing through the grid 27' provided in the inner circumferential wall 25 and through the grid 29' provided in the central circumferential wall 28 passes the filter cartridge 31 in a radial direction and does not bypass the filter cartridge 31.

Filter cartridge 31 comprises a radially outer first filter element 34 serving as a dust filter element and a radially inner second filter element 35 comprising an adsorbent material. This adsorbent material is provided for removing toxic gases and/or toxic particles from the air passing through the filter cartridge 31. The adsorbent material can be activated carbon and/or can comprise at least one molecular sieve like e.g. a zeolite.

Radially inside of the central circumferential wall 28 there is provided a central cylindrical space defining a low pressure chamber 40 of a low pressure generating system 4. The low pressure chamber 40 is defined by the lower end plate 22, the central circumferential wall 28 and an upper end face plate 28'. An electrically driven vacuum blower or vacuum pump 41 is provided inside the low pressure chamber 40. The vacuum pump 41 has a suction portion 42' with an air inlet 42 opening into the low pressure chamber 40. The vacuum pump 41 further comprises an exhaust portion 43' with an air outlet 43 which opens through the lower end plate 22 to the outside below the lamp collecting apparatus so that the vacuum pump 41 can blow into the ambient air.

The low pressure generating system 4 also comprises a tubing 44, 45 having a first suction tube 44 which is connected to an air outlet opening 46 provided in the second cylindrical body 12 defining the tubular portion 13 of the housing 1. The suction tube 44 is disposed in the lateral vicinity of the first cylindrical body 10 and extends substantially vertically along the height thereof. The lower end of the suction tube 44 is connected to an annular tube 45 and opens into the inner space of the annular tube 45. The annular tube 45 encircles the lower end of the first cylindrical body 10 and is connected to rack 2. The annular tube 45 has a plurality of openings defining passageways into the annular space 26 provided between the outer circumferential wall 24 and the inner circumferential wall 25 of the rack 2.

The low pressure generating system 4 thus defines a passageway for air and other gases from the interior of the tubular portion 13 and thus from housing 1 through the air outlet opening 46, the suction tube 44, the annular tube 45, the annular space 26, the annular filter cartridge 31 into the low pressure chamber 40 and from there through the air inlet 42 and the air outlet 43 of the vacuum pump 41 to the ambient air. If the vacuum pump 41 is energized, air is drawn from the interior of housing 1 passing through tubes 44, 45 and the annular space 26 through the filter cartridge 31 into the low pressure chamber 40 and from there into the vacuum pump 41 which blows the air out through the air outlet 43 to the environment. The arrows A in fig. 1 indicate the direction of the airflow in the low pressure generating system 4.

As it is shown schematically in fig. 1, a gas sensor or vapor sensor 48 can be provided downstream of the filter device 3. In the example shown in fig. 1 the sensor 48 is provided in the low pressure chamber 40, however, sensor 48 can be provided at any place downstream of the filter device 3. Sensor 48 is preferably a mercury vapor sensor so that it can be determined whether the filter device 3 is working correct or whether the capacity of the filter device to remove mercury from the air drawn out of housing 1 is exhausted. Thus, the user may obtain an information from sensor 48 indicating when the filter device is to be replaced.

Furthermore, a respective gas sensor or vapor sensor can also be provided to indicate a possible leakage of housing 1, in particular of the container 10'. In order to allow such a leakage survey housing 1, the first and second cylindrical bodies 10, 12 or the container 10' can be designed as double-walled closed body wherein the sensor is provided in the space between the two walls.

A breaker device 5 is provided in the upper portion of the first cylindrical body 10. The breaker device 5 comprises an electric motor 50 which is mounted to the upper end plate 11 of the first cylindrical body 10 in a central position so that the rotational axis 51 of the electric motor 50 is substantially coaxial to axis X of the first cylindrical body 10. The rotational axis 51 of the electric motor 50 penetrates the upper end plate 11 and extends into the interior of the first cylindrical body 10. A plurality of breaker elements 52 is mounted to the rotational axis 51 of the electric motor 50 so that they can rotate together with the rotational axis 51 when the motor 50 is energized.

The working of the lamp collecting apparatus will now be explained in connection with the embodiment shown in fig. 1.

At first, the vacuum pump 41 is energized so that the air is drawn out from the interior of the tubular portion 13. This includes air, vapor and gases rising from the interior of the first cylindrical body 10 upwards into the tubular portion 13. By passing through the filter cartridge 31, particles, dust, vapor and toxic gases are removed from the sucked air so that the cleaned air is exhausted through the air outlet 43 to the environment.

The cover 17 is opened by swinging it about the axis of hinge 18 into the opened position. Then, a lamp (bulb or tube) is inserted into the tubular portion 13 by pushing it through slit 19' of the membrane 19 into the second cylindrical body 12. The lamp slides downwards towards the rotating breaker elements 52 and is crushed by the breaker elements into particles which fall downwards into the container 10'.

A device 11' for checking the remaining capacity of the container is provided in the housing. This device 11' comprises a rod 11" vertically extending inside the first cylindrical body 10 and protruding with its upper end through the upper end plate 11 where a knob 11''' is mounted to the upper end of rod 11". Rod 11" is vertically movable. In order to measure the content of lamp scrap in the container 10' the rod needs to be lifted and thereafter to be dropped again into the first cylindrical body 10 so that the lower end of rod 11" comes into contact with the accumulated scrap particles inside the container 10'. A marking (not shown) provided on the outer circumference of rod 11" indicates when the container 10' is full and the first housing 10 needs to be replaced against an empty barrel-like first cylindrical housing.

A control unit 53 ensures that the electric breaker motor 50 is energized only when the vacuum pump 41 is working and when a sufficient low pressure has been established in the air outlet opening 46. Additionally, the control unit 53 can also automatically start the vacuum pump 41 when the cover 17 is moved in its opened position, i.e. when the lamp inserting opening 16 is open. Another safety switch (not shown) is provided close to the clamp ring 14 and is actuated by the clamp ring 14 so that the breaker motor 50 is automatically switched off when the clamp ring 14 is opened, e.g. when the housing 10 with the full container 10' is replaced.

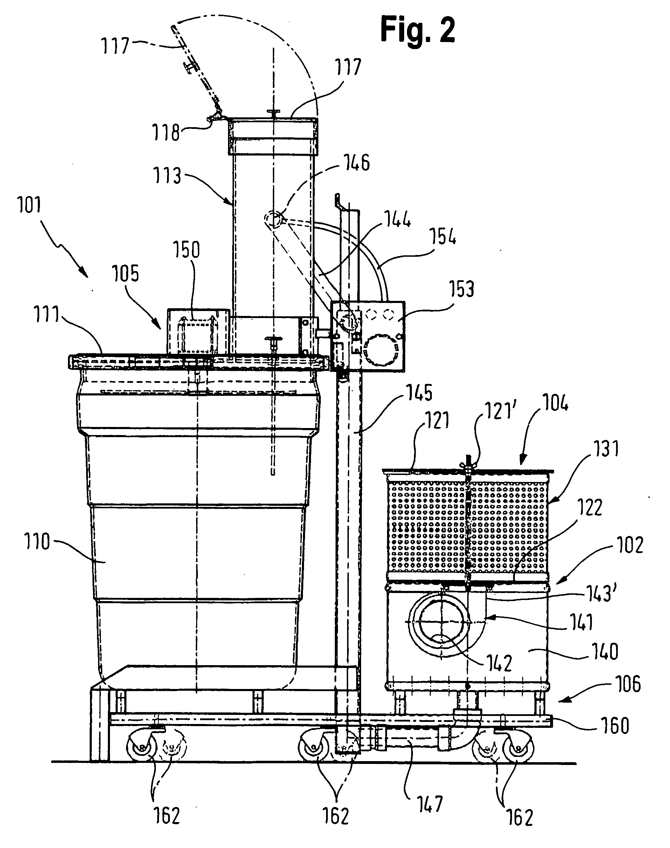

Fig. 2 shows a second embodiment of the present invention wherein the low pressure generating system 104 is situated laterally next to the first cylindrical body 110 of housing 101 instead of being positioned below it like the embodiment of fig. 1. Rack 102 with the low pressure generating system 104 as well as housing 101 are mounted to a cart 106 which is provided with a base plate 160 which is equipped with multiple rollers 162. Thus, the lamp collecting apparatus shown in fig. 2 is movable. This allows that the lamp collecting apparatus can be easily placed at locations where an actual need of such an apparatus exists.

In the embodiment of fig. 2 the tubular portion 113 is mounted vertically on top of the upper end plate 111 of housing 101. Fig. 2 shows the closed position and the opened position of cover 117 mounted by a hinge 118 to the tubular portion 113 at the free end thereof.

The low pressure generating system 104 comprises a vacuum pump 141 provided in a low pressure chamber 140 wherein the air inlet 142 of vacuum pump 141 opens into the low pressure chamber 140. The low pressure chamber 140 is directly connected to a tubing system comprising of a first suction tube 144 which is connected to the air outlet opening 146 of housing 101, a second vertical suction tube 145 connected to said first suction tube 144 and a lower tube unit 147 connecting the vertical second suction tube 145 with the low pressure chamber 140.

An annular filter cartridge 131 is disposed downstream of the vacuum pump 141 wherein the exhaust portion 143' of the vacuum pump 141 opens into a space radially inside the annular filter cartridge 131 which is defined by the inner circumferential wall of the filter cartridge 131, an upper end plate 121 and a lower end plate 122 to which the exhaust portion 143' of the vacuum pump 141 is mounted and which has an opening through which the vacuum pump 141 can blow the air into the inner space of the annular filter cartridge 131. The upper end plate 121 is removably fixed to the rack 2 by a wing screw or a bolt and a wing nut 121'. After opening the wing nut 121' and removing the upper end plate the filter cartridge 131 can be replaced.

In the embodiment of fig. 2 the air from the inside of housing 101 is drawn through the air outlet opening 146 of housing 101, the first and second suction tubes 144, 145, the lower tube unit 147 into the lower pressure chamber 140 and from there through the vacuum pump 141 into the space inside the annular filter cartridge 131 and through the annular filter cartridge 131 to the environment.

Whereas in the embodiment of fig. 1 the filter cartridge 31 is provided on the low pressure side of the vacuum pump, the filter cartridge 131 in the embodiment of fig. 2 is provided on the high pressure side, i.e. downstream of the exhaust portion 143'.

Fig. 2 shows also the control unit 153 for the breaker motor 150 of the breaker device 105. A probe tube 154 connects a pressure sensor (not shown) provided inside the control unit 153 with the air outlet opening 146. Through this probe tube 154 the pressure sensor can sense whether low pressure is provided in the air outlet opening and thus in the tubular portion 113 of housing 101. Based on this detection the electric breaker motor 150 can be switched on when low pressure is provided in the tubular portion so that toxic gases, toxic vapor and toxic dust liberated by breaking a lamp in the breaker device 105 are reliably drawn from the interior of housing 1 into the low pressure chamber 140 and blown out to the ambient air through the annular filter cartridge 131.

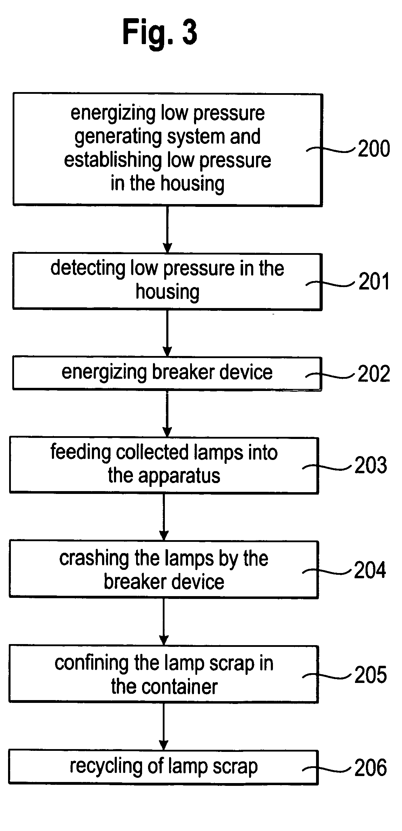

Now, the method for collecting used lamps in a lamp collecting apparatus shown in fig. 1 or in fig. 2 will be described with reference to fig. 3.

In a first step 200 the low pressure generating system 4 is energized by supplying electrical power to the motor of the vacuum blower. Then, in step 202 the breaker device is energized by supplying electrical power to the breaker motor after it has been detected in step 201 that either the drive motor of the vacuum pump is working or that a low pressure has been established in the inner space of the housing and in particular in the tubular portion thereof. Thereafter, in step 203 one or more collected burned out lamps like bulbs or tubes are fed through the lamp insertion opening into the lamp collecting apparatus whereupon they get into contact with breaker elements of the breaker device so that the glass body of the lamps is crashed in step 204. While the crashed particles of the lamp fall down into the container defined by the inside of the first cylindrical body and are confined therein (step 205), toxic gases, toxic vapor and toxic dust liberated from the interior space of the lamp are sucked off from the interior of housing 1; 101 by the vacuum pump 41; 141 wherein this polluted air passes the filter device 31; 131 in which toxic gases and particles are removed from the air so that the purified air can be exhausted to the environment.

The main idea of handling burned out lamps according to the present invention is thus first collecting lamps like bulbs or tubes, then condensing the lamps in the apparatus according to the invention without exposing toxic substances to the environment and confining the lamp scrap in a safe environment in the container inside the housing and when the container is filled recycling the lamp scrap in a recycling facility (step 206).

While the invention has been described by way of examples and in terms of preferred embodiments, it is to be understood that the invention is not limited thereto. To the contrary, it is intended to cover various modifications. Therefore, the scope of the appended claims should be accorded the broadest interpretation so as to encompass all such modifications.

## Claims

1. A lamp collecting apparatus for collecting used illuminants like bulbs or tubes, said apparatus comprising
- a housing (1) with a lamp inserting opening (16) and an air outlet opening (46);
- a breaker device (5) provided in the housing (1) below the lamp inserting opening (16);
- a container (10') for collecting lamp scrap, said container (10') being disposed in said housing (1) below said breaker device (5);
- a low pressure generating system (4) having a suction portion with an air inlet (42) and an exhaust portion with an air outlet (43) wherein said air inlet (42) is effectively connected to the air outlet opening (46) of the housing (1).

2. The lamp collecting apparatus according to claim 1, wherein said housing (1) is provided with a movable cover (17) on the lamp inserting opening (16) so that the lamp inserting opening (16) can be selectively opened or closed by said cover (17).

3. The lamp retaining apparatus according to claim 1, wherein a membrane means (19) is provided between said lamp inserting opening (16) and said breaker device (5) to prevent gas and dust from escaping through the lamp inserting opening (16).

4. The lamp collecting apparatus according to claim 1, 2 or 3,
wherein the breaker device (5) is provided with a motor (50) and with at least one mechanically movable breaker element (52) driven by said motor (50).

5. The lamp collecting apparatus according to one of the preceding claims,
wherein a filter device (3) is provided between the air outlet opening (46) of the housing (1) and said low pressure generating system (4) or in the exhaust portion (43') of said low pressure generating system (4).

6. The lamp collecting apparatus according to claim 5,
wherein the filter device (3) comprises a grid (27') for preventing coarse scrap particles from leaving the housing (1) through the exhaust portion (46) to the ambient air.

7. The lamp collecting apparatus according to claim 6,
wherein the filter device (3) comprises a dust filter element (34) for preventing dust particles from leaving the housing (1) through the exhaust portion (46) to the ambient air.

8. The lamp collecting apparatus according to claim 7,
wherein the filter device (3) comprises a second filter element (35) with an adsorbent material, preferably activated carbon and/or at least one molecular sieve, for preventing selected gases, preferably toxic gases and/or toxic particles, from leaving the housing (1) through the exhaust portion (46) to the ambient air.

9. The lamp collecting apparatus according to claim 4,
wherein said breaker motor (50) is an electrically powered motor and wherein a control device (53) is provided to control the electric power supplied to said motor (50).

10. The lamp collecting apparatus according to claim 9,
wherein said control device (53) is adapted to supply electric power to said motor (50) only when said low pressure generating system (4) is working.

11. The lamp collecting apparatus according to claim 2,
wherein said cover (17) is provided with a sealing (16') which provides an airtight seal of the lamp inserting opening (16) when said cover (17) is in its closed position.

12. The lamp collecting apparatus according to claim 11,
wherein a spring member (18') is provided which resiliently biases said cover (17) towards the closed position in which the cover (17) airtightly closes the lamp inserting opening (16).

13. The lamp collecting apparatus according to one of the preceding claims,
wherein said lamp inserting opening (16) is provided at a first end of a tubular portion (13) of said housing (1).

14. The lamp collecting apparatus according to one of the preceding claims,
wherein a device (11') for checking the remaining capacity of the container (1) is provided in or at the housing (1).

15. A method for collecting used lamps like bulbs or tubes in a lamp collecting apparatus according to one of the preceding claims, said method comprising the following steps:
a) energizing the low pressure generating system (4);
b) energizing the breaker device (5) in order to break a lamp fed to the breaker device (5) into lamp scrap particles;
c) feeding a lamp through the lamp insertion opening (16) into the lamp collecting apparatus; and preferably
d) removing dust, gases and/or volatile substances from the air leaving said housing (1) and exhausted to the ambient air.
